# EUROPÄISCHE PATENTSCHRIFT

(11) **EP 1 574 416 B1**
(45) Veröffentlichungstag und Bekanntmachung des Hinweises auf die Patenterteilung: **18.07.2007**
(21) Anmeldenummer: 05001779.7
(22) Anmeldetag: 28.01.2005
(51) Int. Cl.: B62D 5/04

(54) **Lenkvorrichtung für Kraftfahrzeuge**
Steering apparatus for a motor vehicle
Dispositif de direction pour un véhicule automobile

(30) Priorität: 10.03.2004 DE 102004011593
(43) Veröffentlichungstag der Anmeldung: 14.09.2005
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A- 0 566 168
- EP-A- 1 254 826
- WO-A-01/44037

## Beschreibung

Die Erfindung betrifft eine Lenkvorrichtung für Kraftfahrzeuge gemäß dem Oberbegriff des Patentanspruches 1.

Weit verbreitet in Kraftfahrzeugen sind hydraulisch unterstützte Hilfskraftlenkungen, die auch als Zahnstangenlenkungen ausgeführt sein können. Das hydraulische Lenkventil als Stellmodul dieser Hilfskrafteinrichtung sitzt dabei in der Regel zwischen der Lenksäule und dem Antriebsritzel der Zahnstange. Zur Weiterentwicklung solcher Lenkvorrichtungen sind auch schon Momentensteller mit elektrischem Antrieb vorgeschlagen worden, die die Haptik der Lenkvorrichtung verbessern (Fahrzeug folgt entsprechend elektronisch geregelt dem Fahrbahnverlauf, kann aber manuell z.B. zum Ausweichen eines Hindernisses übersteuert werden). Ferner sind bereits Stellmotoren mit einem Elektromotor und einem Überlagerungsgetriebe vorgeschlagen worden, die in die Lenksäule integriert der manuellen Lenkbetätigung eine zusätzliche Lenkbewegung überlagern, z.B. zur Erzielung einer variablen Lenkübersetzung, etc. Schließlich wurden auch bereits Lenkvorrichtungen vorgeschlagen (steer by wire), die keine mechanische Verbindung mehr zum manuell betätigten Lenkorgan (Entfall der Lenksäule, etc) aufweisen.

Insbesondere in Personenkraftfahrzeugen ist die Anordnung der beschriebenen Hilfskrafteinrichtungen bzw. Überlagerungseinrichtungen aufgrund des beengten Bauraumes im Bereich der Lenkvorrichtung problematisch und zwingt zu kostenintensiven Kompromissen.

Die EP 0 566 168 A offenbart eine Lenkvorrichtung für Kraftfahrzeuge, mit einer Zahnstangenlenkung, die über ein manuell betätigbares Lenkorgan, das durch ein Lenkhandrad und eine Lenksäule gebildet ist, ansteuerbar ist und die Hilfskrafteinrichtungen und/oder Überlagerungseinrichtungen aufweist, die in einem Stellmodul zusammengefasst sind, welches Stellmodul mit einem mit der Zahnstange der Zahnstangenlenkung kämmende Antriebsritzel trieblich verbunden ist, wobei das Stellmodul hinsichtlich seiner Durchtriebsachse im wesentlichen parallel zur Zahnstangenmittelachse ausgerichtet ist, wobei das Stellmodul, der Antriebsritzel der Zahnstangenlenkung und die Lenksäule mittels eines einzelnen Winkeltriebes trieblich miteinander verbunden sind.

Aufgabe der Erfindung ist es, eine Lenkvorrichtung der gattungsgemäßen Art so weiterzubilden, dass diese baulich noch gedrängter und fertigungstechnisch noch günstiger ausgeführt ist, bei gleichzeitig weiter vereinfachter Montage im Kraftfahrzeug.

Diese Aufgabe wird erfindungsgemäß mit den Merkmalen des Patentanspruches 1 gelöst. Vorteilhafte Weiterbildungen der Erfindung sind den Unteransprüchen entnehmbar.

Erfindungsgemäß ist bei einer Lenkvorrichtung mit einem manuell zu betätigenden Lenkhandrad und einer Lenksäule die triebliche Verbindung zwischen der Lenksäule und dem Stellmodul durch einen zweiten Winkeltrieb hergestellt. Die Lenksäule bleibt damit frei von Stellmodulen der Hilfskrafteinrichtung und/oder Überlagerungseinrichtung, so dass der baulich besonders beengte Fußraum- und Armaturenbereich des Kraftfahrzeuges konstruktiv entzerrt wird und verbessert ergonomischen und sicherheitstechnischen Anforderungen angepasst werden kann. Es ergibt sich auch der Vorteil, dass die schwingfähige Masse im Strang der Lenksäule fehlt. Es können sich weder spürbare Biegenoch Drehschwingungen im komfortrelevanten Bereich ausbilden. Die schlanke Lenksäule wäre bei einem Aufprall auch günstiger teleskopierbar.

Das Stellmodul kann bevorzugt an das Gehäuse der Zahnstangenlenkung angebaut sein und somit als Montageeinheit in das Kraftfahrzeug montiert werden.

Des weiteren kann das Stellmodul einen ein Lenkmoment über einen ansteuerbaren Elektromotor und ein Stellgetriebe auf das Antriebsritzel aufbringenden Momentensteller und/oder einen eine Lenkbewegung über einen ansteuerbaren Elektromotor und ein Überlagerungsgetriebe auf das Antriebsritzel aufbringenden Stellmotor und/oder das Lenkventil einer hydraulischen Hilfskrafteinrichtung der Zahnstangenlenkung aufweisen. Ohne größere konstruktive Änderungen an den umgebenden Fahrzeug- und Aggregateteilen können je nach technischer Ausstattung des Kraftfahrzeuges alle oder einzelne dieser Hilfskraft- oder Überlagerungseinrichtungen an die Zahnstangenlenkung angebaut und montiert werden.

Eine bevorzugte Konstruktion wird ferner erzielt, wenn in Kraftflussrichtung von der Lenksäule zum Antriebsritzel der Zahnstangenlenkung betrachtet der Momentensteller stromauf des Lenkventiles und der Stellmotor stromab dazu angeordnet sind. Der Momentensteller wirkt dann im niedrigen Momentenbereich der manuellen Lenkbetätigung, während der Stellmotor für die Überlagerung der Lenkbewegung im höheren Momentenbereich stromab des Lenkventiles agiert und entsprechend stärker in der Antriebsleistung auszulegen ist.

Eine baulich besonders günstige Gestaltung der Lenkvorrichtung wird des weiteren dann erzielt, wenn der Elektromotor des Momentenstellers und/oder der Elektromotor des Stellmotors bzw. deren Drehachsen ebenfalls im wesentlichen parallel zur Zahnstangenachse ausgerichtet sind; das Stellgetriebe bzw. das Überlagerungsgetriebe sind entsprechend anzupassen. Dies erleichtert die Einfügung der Lenkvorrichtung mit dem Stellmodul in einen vorhandenen Bauraum, wobei senkrecht zur Zahnstangenachse abstehende bzw. abragende Bauteile des Stellmoduls vermieden sind.

Eine erfindungsgemäße Anordnung der Lenkvorrichtung in einem Kraftfahrzeug besteht darin, dass die Lenkvorrichtung mit dem Stellmodul an zumindest einen Querträger eines ein Antriebsaggregat aufnehmenden Hilfsrahmens angebaut ist. Damit ist unter Ausnutzung des unterhalb des Antriebsaggregates in der Regel vorhandenen Bauraumes innerhalb des Hilfsrahmens eine Anordnung geschaffen, die eine günstige Vormontage am Hilfsrahmen ermöglicht, wobei zudem der Anschluss der Lenksäule außerhalb des Fahrzeuginnenraumes gut zugänglich herstellbar ist.

Schließlich kann die Lenkvorrichtung mit dem Stellmodul zwischen zwei Querträgern eines durch längs verlaufende Holme geschlossenen Hilfsrahmens positioniert sein. Dies ergibt eine räumlich günstige und besonders geschützte Anordnung mit stabiler und schwingungsresistenter Befestigung der Lenkvorrichtung. Ggf. kann das Gehäuse der Zahnstangenlenkung in den einen Querträger integriert sein bzw. diesen durch entsprechende Verbindung mit den längs verlaufenden Holmen des Hilfsrahmens ersetzen.

Ein Ausführungsbeispiel der Erfindung ist im folgenden mit weiteren Einzelheiten näher erläutert. Die schematische Zeichnung zeigt in:
- **Fig. 1**: eine Draufsicht auf eine Lenkvorrichtung mit einer Zahnstangenlenkung und einem Stellmodul, die zwischen zwei Querträgern eines Hilfsrahmens eines Kraftfahrzeuges angeordnet sind;
- **Fig. 2**: eine raumbildliche Darstellung der Lenkvorrichtung nach Fig. 1 mit deren Befestigungsmitteln; und
- **Fig. 3**: einen Querschnitt gemäß Linie III - III der Fig. 2 durch die Lenkvorrichtung und den Hilfsrahmen, sowie deren Anordnung unterhalb des Antriebsaggregates des Kraftfahrzeuges.

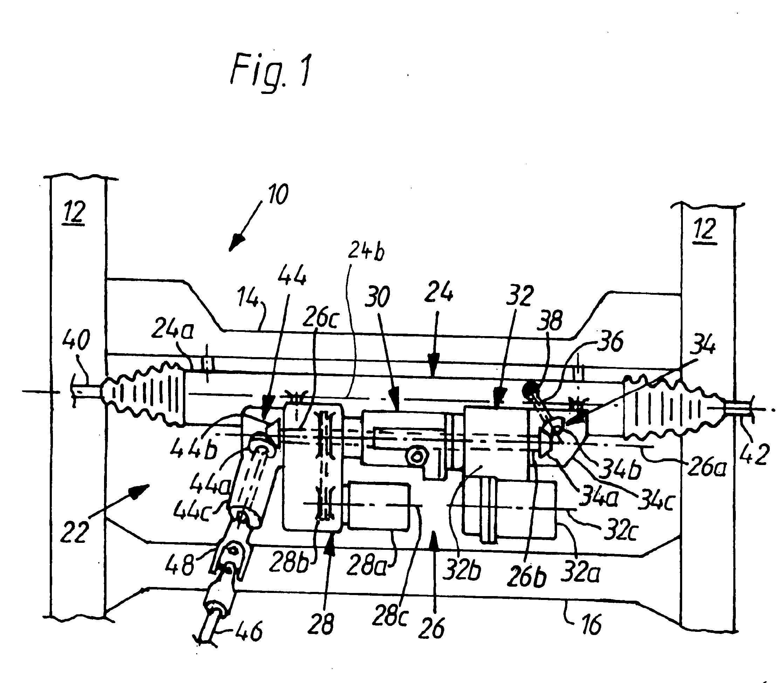

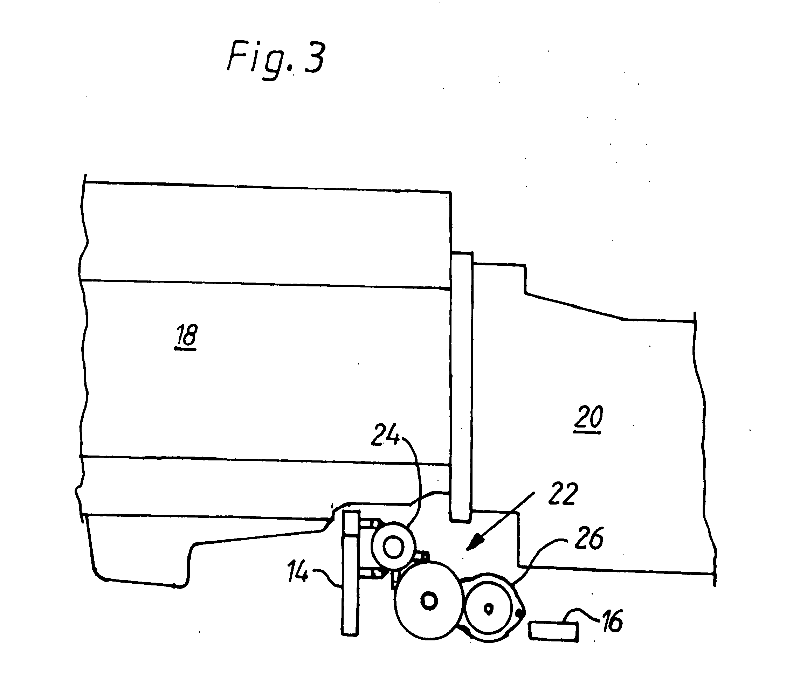

In der **Fig. 1** ist mit 10 ein teilweise dargestellter Hilfsrahmen bezeichnet, der sich soweit ersichtlich aus zwei längsverlaufenden Holmen 12 und einem vorderen und einem hinteren Querträger 14, 16 zusammensetzt. Das Querschnittsprofil der Querträger 14, 16 ist aus der **Fig. 3** ersichtlich.

Der Hilfsrahmen 10, der in nicht dargestellter Weise mit dem Aufbau des Kraftfahrzeuges (starr oder auch elastisch) verbunden ist, trägt in bekannter Weise unter anderem das Antriebsaggregat des Kraftfahrzeuges (vgl. **Fig. 3**), das sich aus der Brennkraftmaschine 18 und dem Geschwindigkeits-Wechselgetriebe 20 mit ggf. integriertem Differenzial (nicht ersichtlich) zusammensetzt.

Unterhalb des Antriebsaggregates 18, 20 ist zwischen den beiden Querträgern 14, 16 des Hilfsrahmens 10 eine Lenkvorrichtung 22 in dem innerhalb der Querträger 14, 16 und der längs verlaufenden Holme 12 gebildeten Freiraum angeordnet, die an dem vorderen Querträger 14 befestigt ist.

Die Lenkvorrichtung 22 (vgl. insbesondere **Fig. 1**) setzt sich aus einer hydraulisch unterstützten Zahnstangenlenkung 24 und einem Stellmodul 26 zusammen, die in noch zu beschreibender Weise miteinander verschraubt sind.

Das Stellmodul 26 wiederum besteht in Kraftflussrichtung betrachtet aus einem Momentensteller 28, einem Lenkventil 30 und einem Stellmotor 32, die trieblich hintereinander geschaltet sind und die eine gemeinsame Durchtriebsachse 26a aufweisen.

Am Ausgang des Stellmoduls 26 ist an einer entsprechenden Ausgangswelle 26b ein erster Winkeltrieb bzw. Kegeltrieb 34 mit Kegelrädern 34a, 34b vorgesehen, der über eine Eingangswelle 36 mit einem Antriebsritzel 38 die Zahnstange (nicht ersichtlich) der Zahnstangenlenkung 24 antreibt. Die Zahnstange, an die beiderseits die zu den lenkbaren Rädern des Kraftfahrzeuges führenden Spurstangen 40, 42 (nur teilweise dargestellt) angeschlossen sind, ist in dem Gehäuse 24a der Zahnstangenlenkung 24 entlang der eingezeichneten Zahnstangenmittelachse 24b verschiebbar geführt.

Es sei bemerkt, dass die Zahnstangenlenkung 24 soweit nicht beschrieben herkömmlicher und dem Fachmann geläufiger Bauart ist. Innerhalb des Gehäu-ses 24a ist eine hydraulische Kolben-Zylinder-Einheit integriert, die in bei Servolenkungen üblicher Art über das Lenkventil 30 mit Hydraulikmedium beaufschlagbar ist. Auch das Lenkventil 30 ist handelsüblicher Konstruktion, jedoch mit der unterschiedlichen Anordnung der Durchtriebsachse 26a parallel zur Zahnstangenmittelachse 24b.

Das Stellmodul 26 weist eingangsseitig einen zweiten Winkeltrieb bzw. Kegeltrieb 44 auf, der sich aus den Kegelrädern 44a und 44b zusammensetzt. Dabei ist das Kegelrad 44a mit der Lenksäule 46 über ein Kardangelenk 48 verbunden, während das Kegelrad 44b mit einer Eingangswelle 26c des Stellmoduls 26 trieblich verbunden ist. Die Lenksäule 46 trägt in bekannter Weise das Lenkhandrad des Kraftfahrzeuges und ist entsprechend drehbar gelagert (nicht dargestellt).

Der Momentensteller 28 besteht im wesentlichen aus einem Elektromotor 28a, der über ein Stellgetriebe 28b mit einem Zahnriemen und entsprechenden Zahnriemenrädern am Elektromotor 28a und der Eingangswelle 26c dem über das Lenkhandrad manuell aufgebrachten Lenkmoment ein Antriebsmoment überlagern kann; das Stellgetriebe 28b mit dem Elektromotor 28a kann sich im stromlosen Zustand frei mitdrehen. Über eine elektronische Steuerung (nicht dargestellt) kann somit ein zusätzliches Lenkmoment eingesteuert werden. Der Momentensensor für die Steuerung kann beispielsweise an der Lenksäule zwischen Lenkrad und einem ersten Kreuzgelenk der Lenksäule angeordnet sein.

Der Momentensteller 28 ist trieblich mit dem hydraulischen Lenkventil 30 verbunden, dessen Funktion einem herkömmlichen Lenkventil mit z.B. einem integrierten Drehschieber und Drehstab und einem entsprechenden Ventilgehäuse entspricht. Das Ventilgehäuse ist über integrierte oder zusätzlich verlegte Leitungen mit der besagten Kolben-Zylinder-Einheit in der Zahnstangenlenkung 24 und über eine Vorlauf- und eine Rücklaufleitung mit der Hydraulikpumpe und einem Hydrauliksumpf verbunden (nicht dargestellt).

Der Ausgang des Lenkventils 30 ist trieblich mit dem Stellmotor 32 verbunden, dessen nicht näher dargestelltes Überlagerungsgetriebe 32b die Ausgangswelle 26b der Durchtriebsachse 26a aufweist. Das Überlagerungsgetriebe 32b ist mit einem antreibenden Elektromotor 32a verbunden und kann durch ein einfaches Planetengetriebe gebildet sein, dessen Eingangselement (z.B. das Sonnenrad) über das Ausgangselement des Lenkventiles 30 angetrieben ist, dessen Ausgangselement (z.B. der Planetenradträger) mit der Ausgangswelle 26b verbunden ist und dessen Stellelement (z.B. das innen und außen verzahnte Außenrad) von dem Elektromotor 32a zur Überlagerung einer zusätzlichen Lenkbewegung angetrieben ist. Der Elektromotor 32a oder das Überlagerungsgetriebe 32b muss selbsthemmend oder mit einer Bremse versehen sein, um im funktionslosen Zustand einen Durchtrieb zur Ausgangswelle 26b sicherzustellen. Zwischen Elektromotor 32a und Überlagerungsgetriebe 32b kann beispielsweise auch ein Winkeltrieb angeordnet sein.Der Stellmotor 32 muss ferner auf die im Fahrbetrieb auftretenden höheren Lenkmomente ausgelegt sein.

Wie aus der Zeichnung **Fig. 1** ersichtlich ist, sind die Elektromotore 28a und 32a durch entsprechende Auslegung des Stellgetriebes 28b (Zahnriemen- oder Kettentrieb) bzw. des Überlagerungsgetriebes 32b (Planetengetriebe) so angeordnet, dass deren Drehachsen 28c, 32c ebenfalls parallel zur Zahnstangenmittelachse 24b ausgerichtet sind.

Die Winkeltriebe bzw. Kegeltriebe 34, 44 sind in entsprechenden Gehäusen 34c, 44c drehbar gelagert, wobei das Gehäuse 44c an den Momentensteller 28 und das Gehäuse 34c an den Stellmotor 32 z.B. mittels Befestigungsschrauben (nicht näher dargestellt) angebaut ist. Ferner sind der Momentensteller 28, das Lenkventil 30 und der Stellmotor 32 entsprechend mit deren Gehäusen (ohne Bezugszeichen) zusammengebaut und aneinander befestigt.

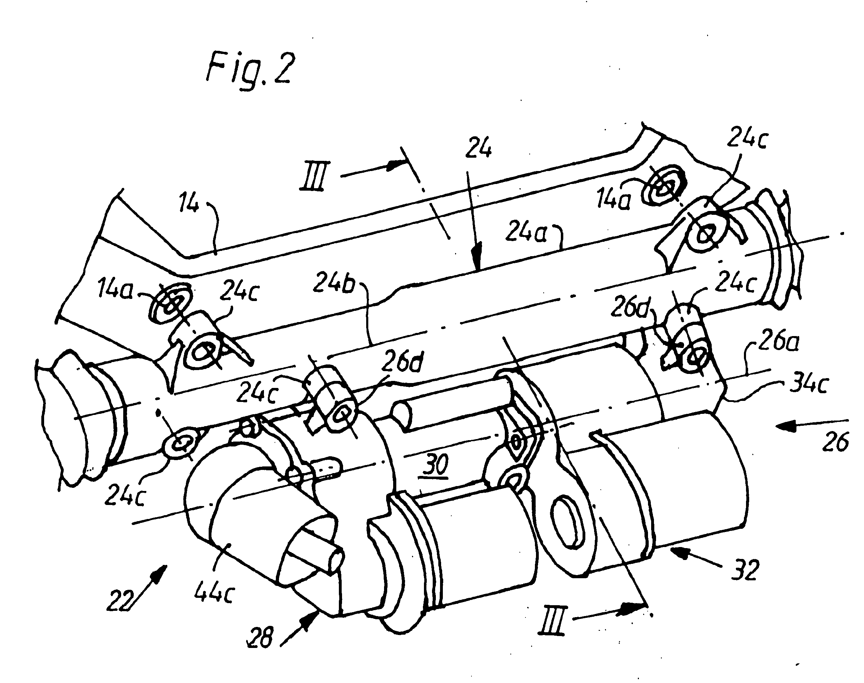

Die Befestigung der Lenkvorrichtung 22 am Querträger 14 (vgl. **Fig. 2**) ist mittels mehrer Schrauben (nicht eingezeichnet) bewerkstelligt, die an das Gehäuse 24a der Zahnstangenlenkung 24 angeformte Lageraugen 24c (es sind nur drei Lageraugen 24c ersichtlich) durchdringen und die in entsprechende Gewindebohrungen 14a des Querträgers 14 eingeschraubt sind.

Über weitere Lageraugen 26d, die an das Gehäuse des Stellmoduls 26 bzw. an die Gehäuse (ohne Bezugszeichen) des Momentenstellers 28 und des Kegeltriebes 34 angeformt sind, ist das Stellmodul 26 an der Zahnstangenlenkung 24 angeschraubt, wobei die nicht dargestellten Befestigungsschrauben in entsprechend an das Gehäuse 24a der Zahnstangenlenkung 24 angeformte Schraubenpfeifen 24c eingeschraubt sind.

Es versteht sich, dass der Momentensteller 28, das Lenkventil 30 und der Stellmotor 32 entsprechend ihrer modifizierten Anordnung und ihrem Zusammenbau anzupassen sind, obwohl sie im wesentlichen bekannter Bauart sein können. Durch deren zur Zahnstangenmittelachse 24b parallele Ausrichtung kann das gesamte Stellmodul 26 innerhalb des Hilfsrahmens 10 positioniert werden, wobei die Winkeltriebe bzw. Kegeltriebe 34, 44 ferner eine weitgehende Freiheit bei der räumlichen Positionierung des Anschlusses der Lenksäule 46, 48 und bei der Anordnung und Drehrichtung der Eingangswelle 36 mit dem Antriebsritzel 38 der Zahnstangenlenkung 24 ermöglichen.

Falls der Momentensteller 28 und/oder der Stellmotor 32 bei unterschiedlichen Fahrzeugtypen nicht verbaut werden sollen, können ggf. entsprechende, baulich einfach ausgeführte Adapter verbaut werden, wodurch wesentliche Änderungen der angrenzenden Bauteile oder der Zahnstangenlenkung 24 vermieden sind.

Die Lenkvorrichtung 22 kann auch an den beiden Querträgern 14, 16 und/oder an den längs verlaufenden Holmen 12 des Hilfsrahmens 10 befestigt sein.

## Patentansprüche

1. Lenkvorrichtung für Kraftfahrzeuge, mit einer Zahnstangenlenkung (24), die über ein manuell betätigbares Lenkorgan, das durch ein Lenkhandrad und eine Lenksäule (46, 48) gebildet ist, ansteuerbar ist und die Hilfskrafteinrichtungen und/oder Überlagerungseinrichtungen aufweist, die in einem Stellmodul (26) zusammengefasst sind, welches Stellmodul (26) mit einem mit der Zahnstange der Zahnstangenlenkung(24) kämmenden Antriebsritzel (38) trieblich verbunden ist, wobei das Stellmodul (26) hinsichtlich seiner Durchtriebsachse (26a) im wesentlichen parallel zur Zahnstangenmittelachse (24b) ausgerichtet ist und das Stellmodul (26) mit dem Antriebsritzel (38) der Zahnstangenlenkung (24) mittels eines ersten Winkeltriebes (34) trieblich verbunden ist,
wobei die Lenksäule (46, 48) mit dem Stellmodul (26) durch einen zweiten Winkeltrieb (44) trieblich verbunden ist.

2. Lenkvorrichtung nach Anspruch 1, **dadurch gekennzeichnet, dass** das Stellmodul (26) an das Gehäuse (24a) der Zahnstangenlenkung (24) angebaut ist.

3. Lenkvorrichtung nach einem oder mehreren der vorhergehenden Ansprüche, **dadurch gekennzeichnet, dass** das Stellmodul (26) einen ein Lenkmoment über einen ansteuerbaren Elektromotor (28a) und ein Stellgetriebe (28b) auf das Antriebsritzel (38) der Zahnstangenlenkung (24) aufbringenden Momentensteller (28) aufweist.

4. Lenkvorrichtung nach einem oder mehreren der vorhergehenden Ansprüche, **dadurch gekennzeichnet, dass** das Stellmodul (26) einen eine Lenkbewegung über einen ansteuerbaren Elektromotor (32a) und ein Überlagerungsgetriebe (32b) auf das Antriebsritzel (38) der Zahnstangenlenkung (24) aufbringenden Stellmotor (32) aufweist.

5. Lenkvorrichtung nach einem oder mehreren der vorhergehenden Ansprüche, **dadurch gekennzeichnet, dass** das Stellmodul (26) ein Lenkventil (30) einer hydraulischen Servolenkung als Zahnstangenlenkung (24) aufweist.

6. Lenkvorrichtung nach den Ansprüchen 3 bis 5, **dadurch gekennzeichnet, dass** in Kraftflussrichtung von der Lenksäule (46, 48) zum Antriebsritzel (38) der Zahnstangenlenkung (24) der Momentensteller (28) stromauf des Lenkventiles (30) und der Stellmotor (32) stromab dazu angeordnet sind.

7. Lenkvorrichtung nach einem der Ansprüche 3 bis 6, **dadurch gekennzeichnet, dass** der Elektromotor (28a) des Momentenstellers (28) bezüglich seiner Drehachse (28c) ebenfalls im wesentlichen parallel zur Zahnstangenachse (24b) ausgerichtet ist.

8. Lenkvorrichtung nach einem der Ansprüche 4 bis 7, **dadurch gekennzeichnet, dass** der Elektromotor (32a) des Stellmotors (32) bezüglich seiner Drehachse (32c) ebenfalls im wesentlichen parallel zur Zahnstangenachse (24b) ausgerichtet ist.

9. Lenkvorrichtung nach einem oder mehreren der vorhergehenden Ansprüche, **dadurch gekennzeichnet, dass** die Lenkvorrichtung (22) mit dem Stellmodul (26) an zumindest einen Querträger (14) eines ein Antriebsaggregat (18, 20) aufnehmenden Hilfsrahmens (10) angebaut ist.

10. Lenkvorrichtung nach Anspruch 9, **dadurch gekennzeichnet, dass** die Lenkvorrichtung (22) mit dem Stellmodul (26) zwischen zwei Querträgern (14, 16) eines durch längs verlaufende Holme (12) geschlossenen Hilfsrahmens (10) positioniert ist.

## Claims

1. Steering apparatus for motor vehicles, with a rack-and-pinion steering mechanism (24) which is operable by a manually controllable steering element constituted by a steering wheel and a steering column (46, 48) and has power-assist devices and/or superimposition devices that are grouped in a servo module (26) kinematically connected to a drive pinion (38) meshing with the rack of the rack-and-pinion steering mechanism (24), wherein the servo module (26) is orientated with its drive-line axis (26a) substantially parallel with the rack's central axis (24b) and is kinematically connected to the drive pinion (38) of the rack-and-pinion steering mechanism (24) by a first bevel gear (34), [and] wherein the steering column (46, 48) is kinematically connected to the servo module (26) through a second bevel gear (44).

2. Steering apparatus according to Claim 1, **characterized in that** the servo module (26) is mounted on the housing (24a) of the rack-and-pinion steering mechanism (24).

3. Steering apparatus according to one or more of the preceding claims, **characterized in that** the servo module (26) has a torque control element (28) applying steering torque through an addressable electric motor (28a) and an actuating gear (28b) to the drive pinion (38) of the rack-and-pinion steering mechanism (24).

4. Steering apparatus according to one or more of the preceding claims, **characterized in that** the servo module (26) has a servo motor (32) imparting steering motion through an addressable electric motor (32a) and a superimposition gear (32b) to the drive pinion (38) of the rack-and-pinion steering mechanism (24).

5. Steering apparatus according to one or more of the preceding claims, **characterized in that** the servo module (26) comprises a steering valve (30) of a hydraulic power-assisted steering unit as the rack-and-pinion steering mechanism (24).

6. Steering apparatus according to Claims 3 to 5, **characterized in that** the torque control element (28) is located upstream of, and the servo motor (32), downstream of, the steering valve (30), in the direction of power flow from the steering column (46, 48) to the drive pinion (38) of the rack-and-pinion steering mechanism (24).

7. Steering apparatus according to any one of Claims 3 to 6, **characterized in that** the electric motor (28a) of the torque control element (28) is also orientated with its rotational axis (28c) substantially parallel with the rack axis (24b).

8. Steering apparatus according to any one of Claims 4 to 7, **characterized in that** the electric motor (32a) of the servo motor (32) is also orientated with its rotational axis (32c) substantially parallel with the rack axis (24b).

9. Steering apparatus according to one or more of the preceding claims, **characterized in that** the steering apparatus (22) with the servo module (26) is mounted on at least one crossmember (14) of a subframe (10) carrying a drive unit (18, 20).

10. Steering apparatus according to Claim 9, **characterized in that** the steering apparatus (22) with the servo module (26) is positioned between two crossmembers (14, 16) of a subframe (10) closed by longitudinal spars (12).

## Revendications

1. Dispositif de direction pour des véhicules automobiles, avec une direction à crémaillère (24) actionnable par l'intermédiaire d'un organe de direction commandé manuellement qui est formé par un volant de direction et une colonne de direction (46, 48) et présente des dispositifs d'asservissement et / ou des dispositifs de superposition qui sont regroupés dans un module de réglage (26), ledit module de réglage (26) étant en relation d'entraînement avec un pignon d'entraînement (38) s'engrenant avec la crémaillère de la direction à crémaillère (24), grâce à quoi le module de réglage (26) est orienté principalement parallèlement à l'axe central de la crémaillère (24b) par rapport à son pont à relais (26a) et le module de réglage (26) est en relation d'entraînement avec le pignon d'entraînement (38) de la direction à crémaillère (24) au moyen d'une première transmission angulaire (34), les colonnes de direction (46, 48) étant en relation d'entraînement avec le module de réglage (26) au moyen d'une seconde transmission angulaire (44).

2. Dispositif de direction selon la revendication 1, **caractérisé en ce que** le module de réglage (26) est monté sur le boîtier (24a) de la direction à crémaillère (24).

3. Dispositif de direction selon l'une ou plusieurs des revendications précédentes, **caractérisé en ce que** le module de réglage (26) présente un actionneur de couple (28) répandant un couple de direction via un moteur électrique actionnable (28a) et un mécanisme de réglage (28b) sur le pignon d'entraînement (38) de la direction à crémaillère (24).

4. Dispositif de direction selon l'une ou plusieurs des revendications précédentes, **caractérisé en ce que** le module de réglage (26) présente un servomoteur (32) répandant un mouvement de direction via un moteur électrique (32a) actionnable et une boîte de superposition (32b) sur le pignon d'entraînement (38) de la direction à crémaillère (24).

5. Dispositif de direction selon l'une ou plusieurs des revendications précédentes, **caractérisé en ce que** le module de réglage (26) présente une soupape de direction (30) d'une direction assistée hydraulique en tant que direction à crémaillère (24).

6. Dispositif de direction selon les revendications 3 à 5, **caractérisé en ce que** dans le sens du flux de force de la colonne de direction (46, 48) jusqu'au pignon d'entraînement (38) de la direction à crémaillère (24), l'actionneur de couple (28) est disposé en amont de la soupape de direction (30) et le servomoteur (32) y est disposé en aval.

7. Dispositif de direction selon les revendications 3 à 6, **caractérisé en ce que** le moteur électrique (28a) de l'actionneur de couple (28) par rapport à son axe de rotation (28c) est également orienté principalement parallèle par rapport à l'axe de la crémaillère (24b).

8. Dispositif de direction selon les revendications 4 à 7, **caractérisé en ce que** le moteur électrique (32a) du servomoteur (32) par rapport à son axe de rotation (32c) est également orienté principalement parallèle par rapport à l'axe de la crémaillère (24b).

9. Dispositif de direction selon l'une ou plusieurs des revendications précédentes, **caractérisé en ce que** le dispositif de direction (22) conjointement avec le module de réglage (26) est monté sur au moins une traverse (14) d'un cadre auxiliaire (10) réceptionnant un mécanisme d'entraînement (18, 20).

10. Dispositif de direction selon la revendication 9, **caractérisé en ce que** le dispositif de direction (22) est positionné avec le module de réglage (26) entre deux traverses (14, 16) d'un cadre auxiliaire (10) fermé par des montants (12) s'étendant en longueur.
